# FASCICULE DE BREVET EUROPEEN

(11) **EP 0 615 091 B1**
(45) Date de publication et mention de la délivrance du brevet: **27.11.1996**
(21) Numéro de dépôt: 93480063.2
(22) Date de dépôt: 03.06.1993
(51) Int. Cl.: F16L 47/02

(54) **Raccord thermosoudable pour tube sur un matériau plastique ainsi qu'un procédé pour le fabriquer**
Heissschweissbare Rohrverbindung aus Kunststoff und Herstellungsverfahren
Heat weldable plastic pipe connection and method of manufacture

(30) Priorité: 04.06.1992 FR 9207018
(43) Date de publication de la demande: 14.09.1994
(73) Titulaire: INNOGE S.A.M., MC-98000 Monaco (MC)
(72) Inventeur: Barfield, Malcolm R., Willenhall, West Midlands WV12 5FH (GB); Barq, Philippe, F-06000 Nice (FR); Grandclement, Cyrille, F-75017 Paris (FR)
(74) Mandataire: Hammond, William

(56) Documents cités:
- EP-A- 0 170 845
- EP-A- 0 430 762
- EP-A- 0 565 397
- DE-A- 3 148 332
- DE-C- 3 103 305
- FR-A- 2 654 978
- US-A- 4 894 521

## Description

La présente invention concerne un raccord thermosoudable pour tubes en un matériau plastique, ainsi qu'un procédé pour le fabriquer.

Actuellement, pour raccorder deux tubes en un même matériau plastique, on utilise un raccord également en un même matériau plastique dans lequel on enfile les extrémités des tubes à raccorder. Dans la paroi interne du raccord, c'est-à-dire, celle en regard des surfaces extérieures des tubes, est noyée une résistance électrique : lorsque l'on fait passer le courant dans cette résistance, ceci entraîne une fusion des surfaces en regard, ce qui assure le soudage au refroidissement.

Pour que le soudage soit de bonne qualité, c'est-à-dire, pour que l'on obtienne une jonction qui soit étanche aux fluides gazeux et qui présente une résistance mécanique satisfaisante, la puissance électrique et le temps de chauffage doivent être judicieusement choisis. De plus, la paroi externe des tubes à souder doit être au préalable nettoyée : il faut gratter en surface de manière à enlever la couche superficielle de matière oxydée et altérée par le vieillissement. En effet, l'entreposage des tubes est parfois long, ce qui expose la paroi externe des tubes à tout type d'agression.

Si cette opération de nettoyage, en fait de grattage, n'est pas effectuée soigneusement, le raccordement des deux tubes a toute chance de se révéler non convenable, c'est-à-dire, présentant un risque de fuite non négligeable à terme et/ou de mauvaise tenue mécanique. De tels inconvénients, même à l'état de risque, ne sont pas acceptables et peuvent être cause de catastrophes.

Il y a lieu de noter que l'opération de grattage est pénible et n'est pas sans risques pour l'ouvrier chargé de la réaliser.

L'état de la technique est notamment constitué par les documents FR-A-2 654 978 et EP-A-565 397 (ce dernier fait parti de l'état de la technique selon l'article 54(3) CBE).

C'est pourquoi, un des buts de la présente invention est-il de fournir un raccord thermosoudable qui permet de raccorder deux tubes en un matériau plastique de façon totalement étanche et sans nuire à la résistance mécanique de l'ensemble.

Un autre but de l'invention, qui est en fait la conséquence ou la cause du précédent, est de fournir un tel raccord qui permet de supprimer les conséquences d'opérations de nettoyage, plus particulièrement de grattage, insuffisantes voire même de les supprimer.

Un but supplémentaire de l'invention est de fournir un tel raccord dont le coût est faible et la mise en oeuvre aussi proche que possible de celle pour les raccords actuellement utilisés.

Ces buts, ainsi que d'autres qui apparaîtront par la suite, sont atteints par un raccord thermosoudable pour raccorder notament au moins deux éléments réalisés en matériaux plastiques identiques ou compatibles, comportant un corps qui est du type constitué au moins partiellement en une matière thermofusible compatible avec les matériaux plastiques desdits éléments et qui comporte une paroi interne ou surface de liaison, directement en regard de la paroi externe d'au moins un desdits éléments, munie d'un élément électriquement conducteur sous forme d'un réseau de fils tricotés, lequel raccord est caractérisé, selon la présente invention, par le fait que ce réseau est obtenu par le tricotage d'un fil conducteur d'électricité et d'un fil non-conducteur d'électricité.

Avantageusement, cet élément électriquement conducteur est recouvert d'un vernis isolant et résistant aux températures de soudage.

De préférence, le fil non-conducteur est en un matériau plastique.

Avantageusement, l'élément électriquement conducteur est constitué de deux nappes qui sont obtenues par un seul tricotage en forme de deux cônes largement ouverts, opposés par leurs sommets, qui sont ensuite pressés l'un contre l'autre de façon à obtenir un disque.

De préférence, un élément isolant est interposé entre les deux cônes. Celui-ci peut avoir une ouverture sensiblement de même diamètre que la petite ouverture des cônes.

Ainsi qu'il a été dit, la présente invention concerne également un procédé de réalisation d'un raccord tel que précédemment décrit, caractérisé par le fait qu'on applique ledit élément électriquement conducteur contre la paroi interne du raccord, qu'on l'y maintient par force et qu'on chauffe ledit élément de façon à le faire pénétrer dans ladite paroi.

La description qui va suivre et qui ne présente aucun caractère limitatif, doit être lue en regard des figures annexées, parmi lesquelles :
- la figure 1 représente en coupe longitudinale un raccord selon un premier mode de réalisation de la présente invention ;
- la figure 2 est une vue partielle d'un élément électrique compris dans le raccord selon la figure 1 ;
- la figure 3 est une vue partielle en coupe longitudinale d'un fil constituant l'élément électrique selon la fiugre 2 ;
- la figure 4 est une coupe transversale d'un raccord selon un second mode de réalisation de la présente invention ; et
- la figure 5 est une vue en perspective d'un élément électrique compris dans un raccord selon la figure 4.

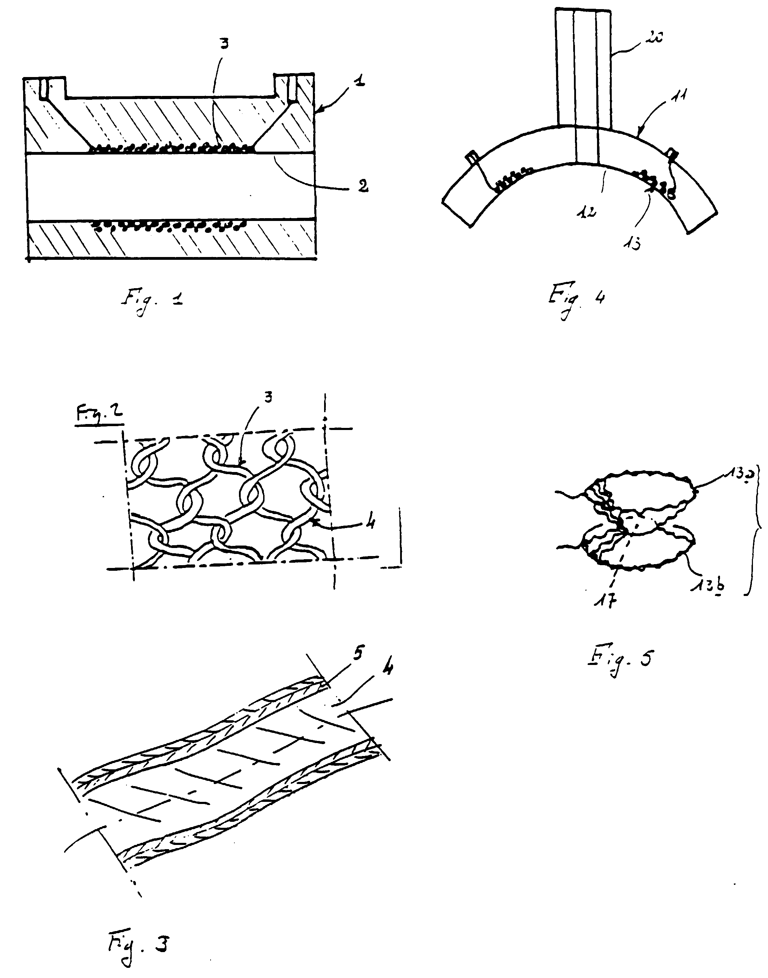

Comme on peut notamment le voir sur la figure 1, un raccord thermosoudable pour tubes en un matériau plastique comporte un corps désigné dans son ensemble par la référence 1 : celui-ci est réalisé en un matériau thermofusible compatible avec le matériau plastique des tubes.

Il est, selon ce premier type de réalisation, en forme générale de manchon dont la paroi interne 2, ou surface de liaison, est directement en regard de la paroi externe des tubes à raccorder. Cette paroi interne 2 comporte un élément électrique 3 qui est élastique et de forme non rectiligne.

L'élément électrique 3 est un filet qui est réalisé en tricotant deux fils : l'un qui est conducteur, et l'autre qui est non-conducteur et obtenu, par exemple, par extension d'une matière plastique. Ainsi que l'homme du métier le comprendra, le fil 4 peut être non-électriquement isolé car il ne se retrouvera jamais en contact avec lui-même.

Ce fil conducteur peut être recouvert d'un vernis isolant (5).

Le filet 3 est situé immédiatement sous la surface de la paroi interne 2 et est relié à une source électrique extérieure au moment du soudage du raccord sur les tubes, comme connu par l'homme du métier.

Le filet 3 peut éventuellement être constitué par deux ou trois nappes reliées électriquement entre elles : en d'autres termes au lieu d'être continu, il peut être fractionné en deux ou trois sous-ensembles.

Lors des opérations de raccordement, chaque extrémité de tube est emboîtée dans le raccord 1. En connectant le filet 3 à une source électrique extérieure, on entraîne un échauffement de la paroi interne 2 ainsi que de la paroi externe des tubes à souder. Au cours du chauffage par effet Joule ou par induction électromagnétique ainsi réalisé, le filet 3 a tendance à reprendre sa forme initiale avant inclusion dans la paroi interne 2 : il rétrécit et retrouve son épaisseur initiale. De cette manière, le filet 3 pénètre au moins partiellement dans la matière en fusion du tube en cours de soudage, entraînant ainsi un échange macromoléculaire de matière entre la paroi interne 2 du raccord 1 et la paroi externe des tubes à raccorder.

Cet échange conduit donc à une meilleure soudure du raccord sur les tubes.

Pour fabriquer un tel raccord, on réalise le corps 1 comme connu par l'homme du métier ; puis on place le filet 3 entre la paroi interne 2 du manchon 1 et on l'y maintient par force, par exemple au moyen d'un noyau cylindrique expansible. En créant un échauffement par effet Joule du filet 3 ou par induction électromagnétique, ou par tout autre moyen, le filet 3 pénètre ainsi dans la paroi interne 2 par fusion de la matière à son voisinage. Après retrait du noyau, le raccord est prêt à être utilisé et le filet 3 possède "une mémoire de forme" ou élasticité qui tendra à lui faire retrouver son volume initial.

Selon un second exemple de réalisation représenté à la figure 4, le raccord thermosoudable comporte un corps désigné dans son ensemble par la référence 11 : celui-ci est réalisé en un matériau thermofusible compatible avec le matériau plastique des tubes à raccorder. Dans le présent cas, il est de forme approximativement hémicylindrique dont la paroi interne 12, ou surface de liaison, est directement en regard de la paroi externe des tubes à raccorder. Cette paroi interne 12 comporte un élément électrique 13 qui est élastique et de forme non rectiligne.

Dans cet exemple de réalisation, le corps 11 comporte une dérivation 20 qui débouche sensiblement au centre de la paroi interne 12 : l'élément électrique 13 comporte à ce niveau une ouverture sensiblement de même diamètre que celui de la dérivation 20.

L'élément électriquement conducteur 13, comme représenté à la figure 5, est constitué de deux nappes 13a et 13b , qui sont en forme de cônes très largement ouverts, et qui sont opposés par leurs sommets percés d'une ouverture 17, dont le diamètre est au moins égal à celui de la dérivation 20. Ces deux nappes 13a et 13b constituent deux cônes sécants.

La mise en oeuvre et la fabrication d'un tel raccord sont identiques à celles selon l'exemple précédemment décrit. Lors de la fabrication, les deux nappes sont écrasées contre la paroi interne 12 et pénètrent sous pression dans celle-ci. Lors du soudage sur les tubes à raccorder, les deux nappes ont tendance à vouloir reprendre leur volume original.

Selon la présente invention, on peut également réaliser un raccord de ce type, dont le corps est sensiblement hémicylindrique, selon le second exemple de réalisation, et l'élément électriquement conducteur un filet selon le premier exemple de réalisation.

Les deux nappes 13a et 13b peuvent être pressées l'une contre avec interposition d'un disque isolant.

## Revendications

1. Raccord thermosoudable pour raccorder notamment au moins deux éléments réalisés en matériaux plastiques identiques ou compatibles, comportant un corps (1, 11) qui est du type constitué au moins partiellement en une matière thermofusible compatible avec lesdits matériaux desdits éléments et qui comporte une paroi interne (2, 12), ou surface de liaison, directement en regard de la paroi externe d'au moins un desdits éléments, munie d'un élément électriquement conducteur sous forme d'un réseau de fils tricotés (3, 13), caractérisé par le fait que ce réseau est obtenu par le tricotage d'un fil conducteur d'électricité et d'un fil non-conducteur d'électricité.

2. Raccord selon la revendication 1, caractérisé par le fait que le fil conducteur est recouvert d'un vernis isolant et résistant aux températures de soudage.

3. Raccord selon la revendication 1, caractérisé par le fait que le fil non-conducteur est en un matériau plastique.

4. Raccord selon la revendication 2, caractérisé par le fait que l'élément électriquement conducteur est constitué de deux nappes (13a et 13b) qui sont obtenues par un seul tricotage en forme de deux cônes largement ouverts (13a, 13b), opposés par leurs sommets, qui sont ensuite pressés l'un contre l'autre de façon à obtenir un disque.

5. Raccord selon la revendication 4, caractérisé par le fait qu'un élément isolant est interposé entre les deux cônes.

6. Raccord selon la revendication 5, caractérisé par le fait que l'élément isolant a une ouverture (17) sensiblement de même diamètre que la petite ouverture des cônes.

7. Procédé de réalisation d'un raccord selon l'une quelconque des revendications 1 à 6, caractérisé par le fait qu'on applique ledit élément électriquement conducteur (3, 13) contre la paroi interne (2, 12) du raccord, qu'on l'y maintient par force et qu'on chauffe ledit élément de façon à le faire pénétrer dans ladite paroi.

## Patentansprüche

1. Warmverschweißender Stutzen zur Verbindung insbesondere von mindestens zwei Elementen aus demselben oder einem kompatiblen Kunststoff, die einen Körper (1, 11) aufweisen, der mindestens teilweise aus einem thermoschmelzbaren Stoff hergestellt ist, der mit den besagten Kunststoffen der besagten Elemente kompatibel ist und eine Innen- oder Verbindungsfläche (2, 12) aufweist, die direkt gegenüber der Außenfläche von mindestens einem der besagten Elemente liegt und ein stromführendes Element in Form eines gestrickten Drahtnetzes (3, 13) aufweist, das gekennzeichnet wird durch die Tatsache, daß dieses Netz durch das Gestrick eines stromführenden Drahtes und eines nichtstromführenden Drahtes gebildet wird.

2. Stutzen nach Anspruch 1, gekennzeichnet durch die Tatsache, daß der stromführende Draht mit einem gegen Schweißtemperaturen beständigen Isolierlack überzogen wird.

3. Stutzen nach Anspruch 1, gekennzeichnet durch die Tatsache, daß der nichtstromführende Draht aus Kunststoff ist.

4. Stutzen nach Anspruch 2, gekennzeichnet durch die Tatsache, daß das stromführende Element aus zwei Schichten (13a und 13b) besteht, die durch ein einziges Gestrick in Form von zwei breit geöffneten Kegeln (13a, 13b) mit entgegengesetzten Spitzen erhalten werden, die dann gegeneinander gepreßt werden, um eine Scheibe zu ergeben.

5. Stutzen nach Anspruch 4, gekennzeichnet durch die Tatsache, daß ein Isolierelement zwischen den beiden Kegeln eingefügt wird.

6. Stutzen nach Anspruch 5, gekennzeichnet durch die Tatsache, daß das Isolierelement eine Öffnung (17) hat, deren Durchmesser dem der kleinen Kegelöffnung ziemlich ähnlich ist.

7. Verfahren zur Herstellung eines Stutzens nach einer beliebigen der Ansprüche 1 bis 6, gekennzeichnet durch die Tatsache, daß das besagte stromführende Element (3, 13) an die Innenfläche (2, 12) des Stutzens angelegt, dort mit Kraft festgehalten und das besagte Element erhitzt wird, damit es in die besagte Fläche eindringt.

## Claims

1. A thermo-weld union to join at least two elements made of identical or compatible plastic material including a body (1, 11) composed at least in part of a thermo-fusible material compatible with the said materials of the said elements and which has an inner wall (2, 12) or bonding surface directly opposite the outer wall of at least one of the said elements and which contains an electrical conductor element in the form of a net of knitted wires (3, 13) characterized by the fact that the net is obtained by knitting together an electrically conducting wire and an electrically non-conducting wire.

2. Union under claim 1, characterized by the fact that the conductor wire is coated with a varnish which is an insulator and is resistant to welding temperatures.

3. Union under claim 1, characterized by the fact that the non-conducting wire is made of a plastic material

4. Union under claim 2, characterized by the fact that the electrically conducting element is composed of two layers (13a and 13b) which are obtained from a single knitting operation in the form of two widely open cones (13a and 13b) with facing summits that are then pressed against each other to obtain a disk.

5. Union under claim 4, characterized by the fact that an insulating element is inserted between the two cones.

6. Union under claim 5, characterized by the fact that the insulating element has an opening (17) of about the same diameter at the small opening in the cones.

7. The process for producing a union under claims 1 through 6, characterized by the fact that the said electrically conducting element (3, 13) is applied against the inner wall (2, 12) of the union, that it is held there by pressure and that the said elements are heated to let it penetrate into the said wall.
